# EUROPÄISCHE PATENTSCHRIFT

(11) **EP 3 008 711 B1**
(45) Veröffentlichungstag und Bekanntmachung des Hinweises auf die Patenterteilung: **11.07.2018**
(21) Anmeldenummer: 14727469.0
(22) Anmeldetag: 28.05.2014
(51) Int. Cl.: G08G 1/16, B60Q 1/00

(54) **VERFAHREN UND VORRICHTUNG ZUM SIGNALISIEREN EINES VISUELL ZUMINDEST TEILWEISE VERDECKTEN VERKEHRSOBJEKTS FÜR EINEN FAHRER EINES FAHRZEUGS**
METHOD AND DEVICE FOR SIGNALLING A TRAFFIC OBJECT THAT IS AT LEAST PARTIALLY VISUALLY CONCEALED TO A DRIVER OF A VEHICLE
PROCÉDÉ ET DISPOSITIF POUR SIGNALER UN OBJET DE TRANSPORT AU MOINS EN PARTIE VISUELLEMENT MASQUÉ POUR UN CONDUCTEUR D'UN VÉHICULE

(30) Priorität: 10.06.2013 DE 102013210729
(43) Veröffentlichungstag der Anmeldung: 20.04.2016
(73) Patentinhaber: Robert Bosch GmbH, 70442 Stuttgart (DE)
(72) Erfinder: ABRAHAM, Steffen, 31134 Hildesheim (DE); DE BOER, Gerrit, 31137 Hildesheim (DE); WINGBERMUEHLE, Jochen, 30559 Hannover (DE)
(86) Internationale Anmeldenummer: PCT/EP2014/061089
(87) Internationale Veröffentlichungsnummer: WO 2014/198544

(56) Entgegenhaltungen:
- DE-A1-102012 014 115
- US-A1- 2009 058 677
- US-A1- 2012 068 859
- US-B1- 6 268 803

## Beschreibung

### Stand der Technik

Die vorliegende Erfindung bezieht sich auf ein Verfahren zum Signalisieren eines visuell zumindest teilweise verdeckten Verkehrsobjekts für einen Fahrer eines Fahrzeugs, auf eine Vorrichtung zum Signalisieren eines visuell zumindest teilweise verdeckten Verkehrsobjekts für einen Fahrer eines Fahrzeugs sowie auf ein entsprechendes Computer-Programmprodukt.

Im Straßenverkehr kommen unübersichtliche Einmündungen, Kreuzungen oder dergleichen vor, an denen Fahrzeuge aufeinandertreffen können. Zumindest eines der Fahrzeuge kann hierbei für ein jeweils anderes beteiligtes Fahrzeug visuell verdeckt sein. Die DE 10 2010 042 089 A1 offenbart ein Navigationssystem und Verfahren zur Zielführung für ein Kraftfahrzeug.

Die Druckschrift US 2009/058677 A1 zeigt ein Verfahren und eine Vorrichtung zur Vorhersage/Warnung von sich bewegenden verstecken Objekten.

Die Druckschrift US 2012/068859 A1 zeigt ein Verfahren zum Steuern eines Kollisionswarnsystems unter Verwendung einer Sichtlinie.

Die Druckschrift DE 10 2012 014115 A1 zeigt ein Verfahren zur Unterstützung eines Fahrers beim Führen eines Fahrzeugs.

Die Druckschrift US 6 268 803 B1 zeigt ein System und ein Verfahren zur Vermeidung von Kollisionen.

### Offenbarung der Erfindung

Vor diesem Hintergrund werden mit der vorliegenden Erfindung ein verbessertes Verfahren zum Signalisieren eines visuell teilweise verdeckten Verkehrsobjekts für einen Fahrer eines Fahrzeugs, eine verbesserte Vorrichtung zum Signalisieren eines visuell teilweise verdeckten Verkehrsobjekts für einen Fahrer eines Fahrzeugs und ein verbessertes Computer-Programmprodukt gemäß den Hauptansprüchen vorgestellt. Vorteilhafte Ausgestaltungen ergeben sich aus den jeweiligen Unteransprüchen und der nachfolgenden Beschreibung.

Ein besonders vorteilhaftes Verfahren zum Signalisieren eines visuell zumindest teilweise verdeckten Verkehrsobjekts für einen Fahrer eines Fahrzeugs weist folgende Schritte auf:
Einlesen einer Objektinformation, die ein erfasstes Verkehrsobjekt repräsentiert, das entlang einem von dem Fahrzeug zu befahrenden Straßenabschnitt angeordnet ist;
Bestimmen, ob das erfasste Verkehrsobjekt für den Fahrer des Fahrzeugs durch zumindest ein Verdeckungsobjekt visuell zumindest teilweise verdeckt ist, wobei das Bestimmen unter Verwendung der Objektinformation und von Umgebungsdaten des Fahrzeugs erfolgt, um eine Verdeckungsinformation zu erzeugen; und
Generieren eines Hinweissignals zum Signalisieren des visuell zumindest teilweise verdeckten Verkehrsobjekts, wobei das Generieren in Abhängigkeit von der Objektinformation, den Umgebungsdaten und der Verdeckungsinformation erfolgt.

Bei dem Fahrzeug kann es sich um ein Kraftfahrzeug handeln, insbesondere ein straßengebundenes Kraftfahrzeug, wie einen Personenkraftwagen, einen Lastkraftwagen oder ein sonstiges Nutzfahrzeug. Die Objektinformation kann von einer Schnittstelle zu einer Verkehrsobjekterfassungseinrichtung eingelesen werden. Die Verkehrsobjekterfassungseinrichtung kann ausgebildet sein, um das Verkehrsobjekt zu erfassen und/oder die Objektinformation zu empfangen. Die Verkehrsobjekterfassungseinrichtung kann beispielsweise in einem Innenraum des Fahrzeugs verbaut sein. Die Verkehrsobjekterfassungseinrichtung kann eine Verarbeitungseinrichtung zur Verarbeitung von Umgebungsinformationen hinsichtlich Objektinformationen aufweisen, die von einem Sensorelement oder einer Empfängereinrichtung der Verkehrsobjekterfassungseinrichtung erfasst bzw. empfangen wurden. Die Verkehrsobjekterfassungseinrichtung kann eine Schnittstelle zum Ausgeben bzw. Bereitstellen von Objektinformationen aufweisen. Bei dem Verkehrsobjekt kann es sich um ein weiteres Fahrzeug bzw. ein Fremdfahrzeug handeln. Das Verkehrsobjekt kann benachbart zu und/oder entlang dem von dem Fahrzeug zu befahrenden Straßenabschnitt angeordnet sein. Die Objektinformation kann Positionsdaten des Verkehrsobjektes relativ zu dem Fahrzeug aufweisen. Alternativ kann die Objektinformation zusätzlich eine Art des Verkehrsobjektes repräsentieren. Das Verfahren kann einen Schritt des Überprüfens, ob ein erfasstes Verkehrsobjekt entlang einem von dem Fahrzeug zu befahrenden Straßenabschnitt angeordnet ist, unter Verwendung von Routendaten und/oder Kartendaten aufweisen, um ein Überprüfungsergebnis zu erzeugen. Hierbei kann der Schritt des Einlesens in Abhängigkeit von dem Überprüfungsergebnis durchgeführt werden. Bei dem zumindest einen Verdeckungsobjekt kann es sich um zumindest ein Infrastrukturobjekt und/oder zumindest einen weiteren Verkehrsteilnehmer handeln, beispielsweise Gebäude, Vegetation, parkende Fahrzeuge oder dergleichen. Die Umgebungsdaten können von einer Umgebungsdatenbereitstellungseinrichtung bereitgestellt worden sein. Im Schritt des Bestimmens können die von der Umgebungsdatenbereitstellungseinrichtung bereitgestellten Umgebungsdaten dahin gehend analysiert bzw. verarbeitet werden, ob zumindest ein das Verkehrsobjekt verdeckendes Verdeckungsobjekt in einer Umgebung des Fahrzeugs angeordnet ist. Die Verdeckungsinformation kann eine Positionsinformation, eine Typeninformation und/oder eine Abmessungsinformation hinsichtlich des zumindest einen Verdeckungsobjektes aufweisen. Das Hinweissignal kann Positionsdaten des Verkehrsobjektes relativ zu dem Fahrzeug und gegebenenfalls eine Art des Verkehrsobjektes basierend auf der Objektinformation, eine Positionsinformation, eine Typeninformation und/oder eine Abmessungsinformation hinsichtlich des zumindest einen Verdeckungsobjektes basierend auf der Verdeckungsinformation und relevante Umgebungsdaten aufweisen. Das Hinweissignal kann ausgebildet sein, um das Signalisieren des visuell zumindest teilweise verdeckten Verkehrsobjekts mittels der Signalisierungseinrichtung auf optische Weise und gegebenenfalls zusätzlich auf akustische und/oder optische Weise zu bewirken.

Eine besonders vorteilhafte Vorrichtung zum Signalisieren eines visuell zumindest teilweise verdeckten Verkehrsobjekts für einen Fahrer eines Fahrzeugs weist folgende Merkmale auf:
eine Einrichtung zum Einlesen einer Objektinformation, die ein erfasstes Verkehrsobjekt repräsentiert, das entlang einem von dem Fahrzeug zu befahrenden Straßenabschnitt angeordnet ist;
eine Einrichtung zum Bestimmen, ob das erfasste Verkehrsobjekt für den Fahrer des Fahrzeugs durch zumindest ein Verdeckungsobjekt visuell zumindest teilweise verdeckt ist, wobei die Einrichtung ausgebildet ist, um das Bestimmen unter Verwendung der Objektinformation und von Umgebungsdaten des Fahrzeugs durchzuführen, um eine Verdeckungsinformation zu erzeugen; und
eine Einrichtung zum Generieren eines Hinweissignals zum Signalisieren des visuell zumindest teilweise verdeckten Verkehrsobjekts, wobei die Einrichtung ausgebildet ist, um das Generieren in Abhängigkeit von der Objektinformation, den Umgebungsdaten und der Verdeckungsinformation durchzuführen.

Unter einer Vorrichtung kann vorliegend ein elektrisches Gerät bzw. Steuergerät verstanden werden, das Objektinformationen und Umgebungsdaten verarbeitet und in Abhängigkeit davon Hinweissignale zum Signalisieren ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines oben genannten Verfahrens verwendet wird, wenn das Programm auf einem Computer oder einer Vorrichtung ausgeführt wird.

Gemäß Ausführungsformen der vorliegenden Erfindung kann einem Fahrer eines Fahrzeugs ein visuell zumindest teilweise verdecktes Verkehrsobjekt, beispielsweise in Fremdfahrzeug, vorteilhaft signalisiert werden. Hierbei kann insbesondere ein Eindruck einer gläsernen Kreuzung oder Einmündung geschaffen werden, wobei eine Verdeckung des Verkehrsobjektes zum Beispiel virtuell aufgehoben bzw. beseitigt werden kann.

Vorteilhafterweise ermöglichen Ausführungsformen der vorliegenden Erfindung insbesondere eine frühzeitige Warnung vor Gefahren durch zumindest teilweise verdeckte Verkehrsobjekte. Auch kann eine Verminderung einer Unfallgefahr an unübersichtlichen Einmündungen bzw. Kreuzungen oder Passagen für ein Fahrzeug erreicht werden. Eine Signalisierung von zumindest teilweise verdeckten Verkehrsobjekten kann hierbei auch insbesondere auf intuitive Weise erfolgen.

Gemäß einer Ausführungsform des Verfahrens kann im Schritt des Generierens ein Hinweissignal zum optischen Signalisieren des visuell zumindest teilweise verdeckten Verkehrsobjekts zur Anzeige mittels einer Blickfeldanzeigevorrichtung im Bereich einer Frontscheibe des Fahrzeugs generiert werden. Hierbei kann das Hinweissignal ausgebildet sein, um ein optisches Signalisieren des visuell zumindest teilweise verdeckten Verkehrsobjekts mittels der Blickfeldanzeigevorrichtung zu bewirken. Bei der Blickfeldanzeigevorrichtung kann es sich um ein sogenanntes Head-Up-Display oder dergleichen handeln. Die Blickfeldanzeigevorrichtung kann ausgebildet sein, um zum optischen Signalisieren ein durch das Hinweissignal repräsentiertes Bild in einen Bereich der Frontscheibe zu projizieren, der auf einer Sichtachse des Fahrers beim Betrachten eines Verkehrsgeschehens durch die Frontscheibe hindurch liegt. Das optische Signalisieren kann auch unter Verwendung einer geeigneten Farbgebung bewirkt werden. Die Blickfeldanzeigevorrichtung bzw. das Head-Up-Display (HUD) kann auch zur Anzeige von Navigationsinformationen, aktuellen Routenempfehlungen, einer Fahrzeuggeschwindigkeit sowie zur Unterstützung einer Abstandsfolgefahrt (z. B. ACC, adaptive cruise control) und dergleichen in Gestalt einer Einspiegelung frontal im Sichtbereich des Fahrers vor dem Hintergrund des Straßenraumes ausgebildet sein. Eine solche Ausführungsform bietet den Vorteil, dass durch ein optisches Signalisieren mittels der Blickfeldanzeigevorrichtung dem Fahrer besonders intuitive, unkomplizierte und zuverlässige Hinweise auf eine potenzielle Gefahrenquelle in Gestalt des visuell zumindest teilweise verdeckten Verkehrsobjekts gegeben werden können. Bei dieser Ausführungsform werden Elemente der sogenannten erweiterten Realität bzw. Augmented Reality verwendet. Insbesondere können Bildelemente auf einer Netzhaut des Fahrers eingeblendet werden, sodass der Eindruck entsteht, die Bildelemente würden direkt auf einer Fahrzeugumgebung projiziert.

Dabei kann im Schritt des Generierens ein Hinweissignal generiert werden, um zum optischen Signalisieren eine durch das zumindest eine Verdeckungsobjekt visuell unverdeckte Anzeige des visuell zumindest teilweise verdeckten Verkehrsobjekts zu bewirken. Hierbei kann das zumindest eine Verdeckungsobjekt transparent angezeigt werden, sodass das visuell zumindest teilweise verdeckte Verkehrsobjekt durch das zumindest eine Verdeckungsobjekt durchscheinend angezeigt wird. Alternativ kann das visuell zumindest teilweise verdeckte Verkehrsobjekt zum optischen Signalisieren mittels der Blickfeldanzeigevorrichtung in der Anzeige vor das zumindest eine Verdeckungsobjekt platziert sein. Eine solche Ausführungsform bietet den Vorteil, dass Verdeckungen an unübersichtlichen Einmündungen oder Kreuzungen aufgehoben werden können, indem verdeckte Verkehrsteilnehmer mittels der Blickfeldanzeigevorrichtung virtuell ortsrichtig in die Frontscheibe eingeblendet werden. Somit kann zur optischen Signalisierung eine intuitive und ortsrichtige Anzeige verdeckter Verkehrsteilnehmer erfolgen, anstelle von lediglich textuellen, symbolischen oder Audiohinweisen.

Auch kann ein Schritt des Ermittelns einer Vorfahrtsrechtsinformation über ein Vorfahrtsrecht des visuell zumindest teilweise verdeckten Verkehrsobjekts bezüglich des Fahrzeugs unter Verwendung der Objektinformation und der Umgebungsdaten des Fahrzeugs vorgesehen sein. Die Vorfahrtsrechtsinformation kann das Vorfahrtsrecht des visuell zumindest teilweise verdeckten Verkehrsobjekts bezüglich des Fahrzeugs repräsentieren. Hierbei können die Umgebungsdaten beispielsweise Kartendaten mit Vorfahrtstraßen, Bilddaten mit erkannten Verkehrsschildern und/oder dergleichen aufweisen. Eine solche Ausführungsform bietet den Vorteil, dass zusätzlich zu einem Erfassen des visuell zumindest teilweise verdeckten Verkehrsobjekts auch dessen Vorfahrtsrecht bezüglich des Fahrzeugs erkannt werden kann, d. h. insbesondere ob das Fahrzeug oder das visuell zumindest teilweise verdeckte Verkehrsobjekt vorfahrtsberechtigt ist.

Hierbei kann im Schritt des Generierens das Hinweissignal in Abhängigkeit von der Vorfahrtsrechtsinformation generiert wird, um ein Signalisieren des Vorfahrtsrechts zu bewirken. Das Hinweissignal kann somit Positionsdaten des Verkehrsobjektes relativ zu dem Fahrzeug und gegebenenfalls eine Art des Verkehrsobjektes basierend auf der Objektinformation, eine Positionsinformation, eine Typeninformation und/oder eine Abmessungsinformation hinsichtlich des zumindest einen Verdeckungsobjektes basierend auf der Verdeckungsinformation, relevante Umgebungsdaten und die Vorfahrtsrechtsinformation über das Vorfahrtsrecht des visuell zumindest teilweise verdeckten Verkehrsobjekts bezüglich des Fahrzeugs basierend auf der Vorfahrtsinformation aufweisen. Das Hinweissignal kann ausgebildet sein, um bei einem vorliegenden Vorfahrtsrecht des visuell zumindest teilweise verdeckten Verkehrsobjekts zusätzlich zu dem Signalisieren des visuell zumindest teilweise verdeckten Verkehrsobjekts das Signalisieren des Vorfahrtsrechts des visuell zumindest teilweise verdeckten Verkehrsobjekts bezüglich des Fahrzeugs mittels der Signalisierungseinrichtung auf optische Weise, akustische Weise und/oder haptische Weise zu bewirken. Dabei kann das Signalisieren des Vorfahrtsrechts ein optisches Symbol oder Warnsymbol, einen akustischen Hinweis oder Warnhinweis und/oder eine haptische Rückkopplung aufweisen. Eine solche Ausführungsform bietet den Vorteil, dass auch Warnungen bzw. Hinweise zur Vorfahrtssituation hinsichtlich eines verdeckten Verkehrsteilnehmers signalisiert werden können. Somit kann eine Verkehrssicherheit weiter erhöht werden.

Ferner kann ein Schritt des Ausgebens des Hinweissignals an eine Schnittstelle zu einer Signalisierungseinrichtung und zu mindestens einem Fahrerassistenzsystem vorgesehen sein. Auch kann im Schritt des Ausgebens das Hinweissignal an eine erste Schnittstelle zu der Signalisierungseinrichtung und an zumindest eine zweite Schnittstelle zu dem mindestens einen Fahrerassistenzsystem ausgegeben werden. Das mindestens eine Fahrerassistenzsystem kann ausgebildet sein, um in einen Fahrbetrieb des Fahrzeugs einzugreifen. Das mindestens eine Fahrerassistenzsystem kann beispielsweise eine Bremsassistenzfunktion oder dergleichen aufweisen. Eine solche Ausführungsform bietet den Vorteil, dass das Hinweissignal sowohl der Signalisierungseinrichtung als auch mindestens einem Fahrerassistenzsystem bereitgestellt werden kann, um vor einer Verkehrsgefahr durch Verdeckung bzw. Unübersichtlichkeit warnen zu können.

Insbesondere können im Schritt des Einlesens als Objektinformation Bilddaten von einer Fahrzeugkamera und zusätzlich oder alternativ ein fahrzeugexternes Datensignal von einer Datenempfangseinrichtung eingelesen werden. Insbesondere kann es sich bei der Fahrzeugkamera hierbei um zumindest eine in Vorwärtsfahrtrichtung und zusätzlich oder alternativ in Rückwärtsfahrtrichtung des Fahrzeugs gerichtete Fahrzeugkamera, Bildverarbeitungseinrichtung und/oder dergleichen handeln. Die Fahrzeugkamera kann hierbei während der Fahrt des Fahrzeugs zumindest eine Abtastung einer Umgebung des Fahrzeugs aufnehmen, wobei die Abtastung eine Objektinformation bzw. ein erfasstes visuell zumindest teilweise verdecktes Verkehrsobjekt beinhalten kann. Die Objektinformation bzw. das visuell zumindest teilweise verdeckte Verkehrsobjekt kann in der Abtastung der Fahrzeugumgebung mittels eines geeigneten Auswertungs- bzw. Erkennungsverfahrens erkannt werden. Alternativ kann die Objektinformation von einer Schnittstelle zu einer Datenempfangseinrichtung bzw. Datenquelle eingelesen werden. Hierbei kann ein fahrzeugexternes Datensignal die Objektinformation aufweisen. Das fahrzeugexterne Datensignal kann beispielsweise mittels drahtloser Kommunikation, insbesondere so genannter "Car to Car" und "Car to Infrastructure" Kommunikation oder dergleichen, mittels der Datenempfangseinrichtung empfangen werden. Eine solche Ausführungsform bietet den Vorteil, dass die Objektinformation über ein Vorliegen einer potenziellen Verkehrsgefahr durch einen möglicherweise zumindest partiell verdecktes Verkehrsobjekt seitens des Fahrzeugs erfasst und/oder empfangen werden kann. Somit kann die Objektinformation mittels Bordsensorik des Fahrzeugs und/oder einer Vernetzung von Fahrzeugen untereinander gewonnen werden.

Auch können im Schritt des Bestimmens als Umgebungsdaten Kartendaten aus einer Navigationsdatenbank und zusätzlich oder alternativ Bilddaten von einer Fahrzeugkamera verwendet werden. Hierbei können die Kartendaten und zusätzlich oder alternativ die Bilddaten eine Positionsinformation, eine Typeninformation und zusätzlich oder alternativ eine Abmessungsinformation über das zumindest eine Verdeckungsobjekt aufweisen. Die Umgebungsdatenbereitstellungseinrichtung kann somit eine Navigationsdatenbank eines Navigationsgerätes bzw. Navigationssystems und/oder eine Fahrzeugkamera aufweisen. Eine solche Ausführungsform bietet den Vorteil, dass ein visuell zumindest teilweise verdeckter Zustand des Verkehrsobjektes sicher erkannt werden kann, indem Kartendaten und/oder Bilddaten zum Bestimmen des verdeckten Zustandes verwendet werden können.

Die Erfindung wird anhand der beigefügten Zeichnungen beispielhaft näher erläutert. Es zeigen:
- Fig. 1: eine schematische Darstellung eines Fahrzeugs mit einer Vorrichtung gemäß einem Ausführungsbeispiel der vorliegenden Erfindung;
- Fig. 2: ein Ablaufdiagramm eines Verfahrens gemäß einem Ausführungsbeispiel der vorliegenden Erfindung;
- Fig. 3: eine Darstellung eines visuell zumindest teilweise verdeckten Verkehrsobjekts; und
- Fig. 4: eine Darstellung eines Signalisierens des visuell zumindest teilweise verdeckten Verkehrsobjekts aus Fig. 3, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

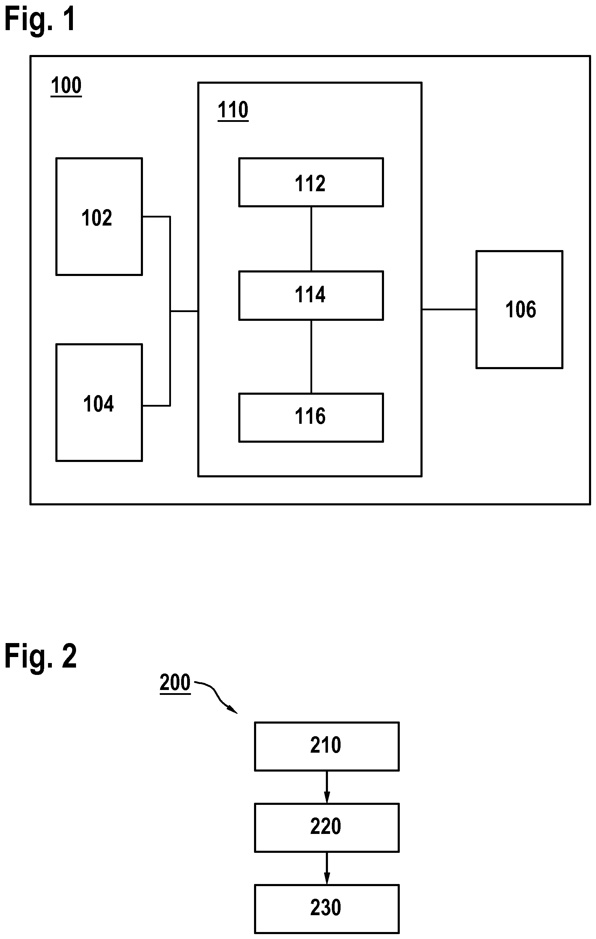

Fig. 1 zeigt eine schematische Darstellung eines Fahrzeugs 100 mit einer Vorrichtung gemäß einem Ausführungsbeispiel der vorliegenden Erfindung. Das Fahrzeug 100 weist eine Verkehrsobjekterfassungseinrichtung 102 in Gestalt einer Fahrzeugkamera und/oder einer Datenempfangseinrichtung, eine Umgebungsdatenbereitstellungseinrichtung 104 in Gestalt einer Navigationsdatenbank und/oder einer Fahrzeugkamera, eine Signalisierungseinrichtung 106 in Gestalt einer Blickfeldanzeigevorrichtung, insbesondere eines sogenannten Head-Up-Displays (HUD), und eine Signalisierungsvorrichtung bzw. Vorrichtung 110 mit einer Einleseeinrichtung 112, einer Bestimmungseinrichtung 114 sowie einer Generiereinrichtung 116. Die Vorrichtung 110 ist zum Signalisieren eines visuell zumindest teilweise verdeckten Verkehrsobjekts für einen Fahrer des Fahrzeugs 100 ausgebildet bzw. vorgesehen.

Die Verkehrsobjekterfassungseinrichtung 102 ist mittels einer Kommunikationsschnittstelle, beispielsweise einer elektrischen Leitung oder einer drahtlosen Verbindung mit der Vorrichtung 110 verbunden. Die Verkehrsobjekterfassungseinrichtung 102 weist beispielhaft eine Fahrzeugkamera und/oder eine Datenempfangseinrichtung auf. Die Verkehrsobjekterfassungseinrichtung 102 ist ausgebildet, um ein Verkehrsobjekt in einer Umgebung des Fahrzeugs 100 zu erfassen. Auch ist die Verkehrsobjekterfassungseinrichtung 102 ausgebildet, um eine Objektinformation zu erzeugen, die das erfasste Verkehrsobjekt repräsentiert. Zusätzlich oder alternativ ist die Verkehrsobjekterfassungseinrichtung 102 ausgebildet, um ein fahrzeugexternes Datensignal zu empfangen, das eine Objektinformation beinhaltet, die ein Verkehrsobjekt in der Umgebung des Fahrzeugs 100 repräsentiert. Bei dem Verkehrsobjekt handelt es sich beispielhaft um ein Fremdfahrzeug. Ferner ist die Verkehrsobjekterfassungseinrichtung 102 ausgebildet, um die Objektinformation der Vorrichtung 110 bereitzustellen.

Die Umgebungsdatenbereitstellungseinrichtung 104 ist mittels einer Kommunikationsschnittstelle, beispielsweise einer elektrischen Leitung oder einer drahtlosen Verbindung mit der Vorrichtung 110 verbunden. Die Umgebungsdatenbereitstellungseinrichtung 104 weist beispielhaft eine Navigationsdatenbank und/oder eine Fahrzeugkamera auf. Die Umgebungsdatenbereitstellungseinrichtung 104 ist ausgebildet, um Umgebungsdaten des Fahrzeugs 100 zu erfassen und/oder zu empfangen. Die Umgebungsdaten beinhalten beispielsweise Kartendaten von der Navigationsdatenbank und/oder Bilddaten von der Fahrzeugkamera. Auch ist die Umgebungsdatenbereitstellungseinrichtung 104 ausgebildet, um die Umgebungsdaten der Vorrichtung 110 bereitzustellen.

Die Vorrichtung 110 ist mittels zumindest einer Kommunikationsschnittstelle, beispielsweise einer elektrischen Leitung oder einer drahtlosen Verbindung mit der Verkehrsobjekterfassungseinrichtung 102 und mit der Umgebungsdatenbereitstellungseinrichtung 104 verbunden. Die Vorrichtung 110 ist ausgebildet, um die Objektinformation von der Verkehrsobjekterfassungseinrichtung 102 und die Umgebungsdaten von der Umgebungsdatenbereitstellungseinrichtung 104 zu empfangen.

Die Einleseeinrichtung 112 der Vorrichtung 110 ist ausgebildet, um eine Objektinformation einzulesen, die ein erfasstes Verkehrsobjekt repräsentiert, das entlang einem von dem Fahrzeug 100 zu befahrenden Straßenabschnitt angeordnet ist. Optional weist die Vorrichtung 110 eine in Fig. 1 nicht dargestellte Überprüfungseinrichtung auf oder ist mit einer solchen Überprüfungseinrichtung verbunden, die ausgebildet ist, um unter Verwendung von Routendaten und/oder Kartendaten zu überprüfen, ob ein erfasstes Verkehrsobjekt entlang einem von dem Fahrzeug 100 zu befahrenden Straßenabschnitt angeordnet ist, um ein Überprüfungsergebnis zu erzeugen. Hierbei ist die einzige Einrichtung 112 optional ausgebildet, um eine Objektinformation in Abhängigkeit von dem Überprüfungsergebnis einzulesen.

Die Bestimmungseinrichtung 114 der Vorrichtung 110 ist ausgebildet, um unter Verwendung der Objektinformation und der Umgebungsdaten zu bestimmen, ob das erfasste Verkehrsobjekt für den Fahrer des Fahrzeugs 100 durch zumindest ein Verdeckungsobjekt visuell zumindest teilweise verdeckt ist, um eine Verdeckungsinformation zu erzeugen. Bei dem zumindest einen Verdeckungsobjekt handelt es sich beispielsweise um zumindest ein Infrastrukturobjekt und/oder zumindest einen weiteren Verkehrsteilnehmer. Hierbei ist die Bestimmungseinrichtung 114 beispielsweise ausgebildet, um eine geeignete Analyse oder Verarbeitung der Objektinformation in Verbindung mit Kartendaten und/oder Bilddaten der Umgebungsdaten durchzuführen, um die Verdeckungsinformation zu erzeugen.

Die Generiereinrichtung 116 der Vorrichtung 110 ist ausgebildet, um in Abhängigkeit von der Objektinformation, den Umgebungsdaten und der Verdeckungsinformation ein Hinweissignal zu generieren. Das Hinweissignal ist zur Ausgabe an eine Schnittstelle zu der Signalisierungseinrichtung 106 vorgesehen. Hierbei ist das Hinweissignal ausgebildet, um bei einer Ausgabe mittels der Signalisierungseinrichtung 106 das Signalisieren des visuell zumindest teilweise verdeckten Verkehrsobjekts zu bewirken.

Die Vorrichtung 110 ist mittels einer Kommunikationsschnittstelle, beispielsweise einer elektrischen Leitung oder einer drahtlosen Verbindung mit der Signalisierungseinrichtung 106 verbunden. Die Vorrichtung 110 ist ausgebildet, um das Hinweissignal der Signalisierungseinrichtung 106 bereitzustellen.

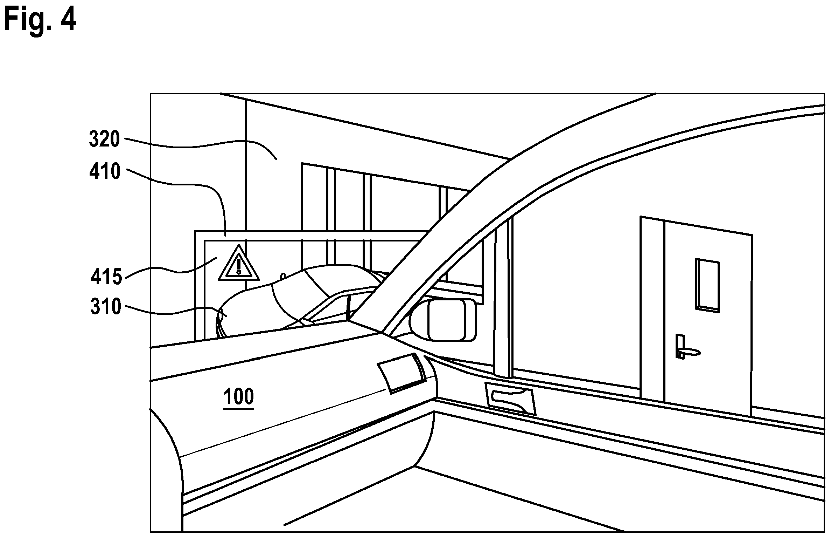

Die Signalisierungseinrichtung 106 ist ausgebildet, um ansprechend auf das Hinweissignal das Signalisieren des visuell zumindest teilweise verdeckten Verkehrsobjekts für den Fahrer des Fahrzeugs 100 zu bewirken. Insbesondere ist die Signalisierungseinrichtung 106 ausgebildet, um ansprechend auf das Hinweissignal eine Visualisierung bzw. optische Signalisierung des visuell zumindest teilweise verdeckten Verkehrsobjekts für den Fahrer des Fahrzeugs 100 zu bewirken. Eine beispielhafte Visualisierung bzw. optische Signalisierung zum Signalisieren des visuell zumindest teilweise verdeckten Verkehrsobjekts für den Fahrer des Fahrzeugs 100 ist in den Fig. 4 dargestellt. Auch wenn es in Fig. 1 nicht gezeigt ist, so ist die Vorrichtung 110 optional auch mit einer Fahrerassistenzeinrichtung verbunden. Hierbei ist die Vorrichtung 110 auch ausgebildet, um das Hinweissignal der Fahrerassistenzeinrichtung bereitzustellen.

Fig. 2 zeigt ein Ablaufdiagramm eines Verfahrens 200 zum Signalisieren eines visuell zumindest teilweise verdeckten Verkehrsobjekts für einen Fahrer eines Fahrzeugs, gemäß einem Ausführungsbeispiel der vorliegenden Erfindung. Das Verfahren 200 ist insbesondere in Verbindung mit einem Fahrzeug ausführbar, das eine Verkehrsobjekterfassungseinrichtung, eine Umgebungsdatenbereitstellungseinrichtung und eine Signalisierungseinrichtung umfasst. Das Verfahren 200 kann in Verbindung mit der Signalisierungsvorrichtung bzw. Vorrichtung aus Fig. 1 vorteilhaft ausgeführt werden. Hierbei kann die Signalisierungsvorrichtung bzw. Vorrichtung aus Fig. 1 ausgebildet sein, um die Schritte des Verfahrens 200 auszuführen.

Das Verfahren 200 weist einen Schritt 210 des Einlesens einer Objektinformation auf, die ein erfasstes Verkehrsobjekt repräsentiert, das entlang einem von dem Fahrzeug zu befahrenden Straßenabschnitt angeordnet ist. Auch weist das Verfahren 200 einen Schritt 220 des Bestimmens auf, ob das erfasste Verkehrsobjekt für den Fahrer des Fahrzeugs durch zumindest ein Verdeckungsobjekt visuell zumindest teilweise verdeckt ist. Dabei erfolgt der Schritt 220 des Bestimmens unter Verwendung der Objektinformation und von Umgebungsdaten des Fahrzeugs, um eine Verdeckungsinformation zu erzeugen. Ferner weist das Verfahren 200 einen Schritt 230 des Generierens eines Hinweissignals zum Signalisieren des visuell zumindest teilweise verdeckten Verkehrsobjekts auf. Hierbei erfolgt der Schritt 230 des Generierens in Abhängigkeit von der Objektinformation, den Umgebungsdaten und der Verdeckungsinformation.

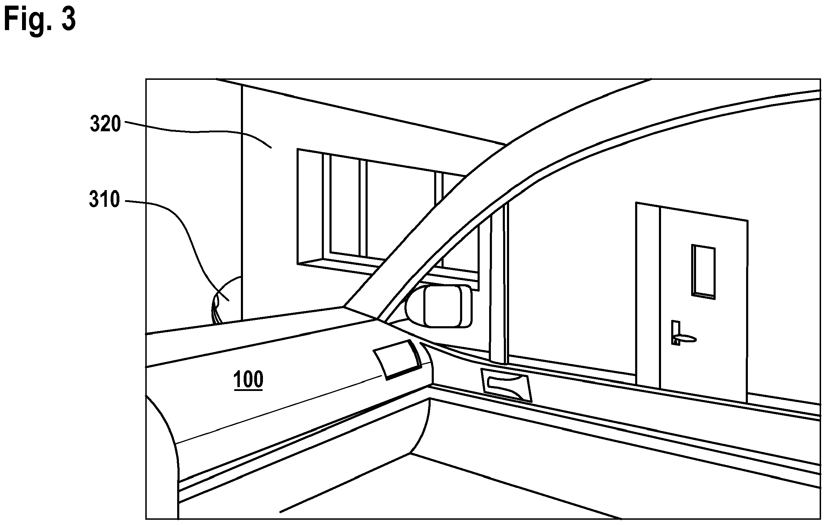

Fig. 3 zeigt eine Darstellung eines visuell zumindest teilweise verdeckten Verkehrsobjekts. Gezeigt sind ein Fahrzeug 100, ein Verkehrsobjekt 310 beispielhaft in Gestalt eines Fremdfahrzeugs und ein Verdeckungsobjekt 320 beispielhaft in Gestalt eines Hauses. Bei dem Fahrzeug 100 handelt es sich beispielsweise um ein Fahrzeug wie das Fahrzeug aus Fig. 1. Genau gesagt zeigt Fig. 3 aus einer Perspektive eines Fahrers des Fahrzeugs 100 eine Ansicht durch eine Frontscheibe des Fahrzeugs 100 hindurch auf das Verkehrsobjekt 310 und das Verdeckungsobjekt 320. Das Verkehrsobjekt 310 ist hierbei durch das Verdeckungsobjekt 320 für den Fahrer des Fahrzeugs 100 visuell zumindest teilweise verdeckt. Anders ausgedrückt ist aufgrund eines Blickwinkels sowie des Verdeckungsobjektes 320 für den Fahrer des Fahrzeugs 100 lediglich ein Teilabschnitt des Verkehrsobjektes 310 sichtbar. Das Fahrzeug 100 und das Verkehrsobjekt 310 befinden sich beispielsweise auf unterschiedlichen Straßen im Bereich einer Kreuzung oder Einmündung. Somit ist in Fig. 3 eine reale Situation einer unübersichtlichen Kreuzung oder Einmündung dargestellt.

Fig. 4 zeigt eine Darstellung eines Signalisierens des visuell zumindest teilweise verdeckten Verkehrsobjekts aus Fig. 3, gemäß einem Ausführungsbeispiel der vorliegenden Erfindung. Gezeigt sind das Fahrzeug 100, welches insbesondere die Vorrichtung aus Fig. 1 sowie die Signalisierungseinrichtung aus Fig. 1 aufweist, das Verkehrsobjekt 310 sowie das Verdeckungsobjekt 320 aus Fig. 3, ein erstes Signalisierungselement 410 und ein zweites Signalisierungselement 415. Das Signalisieren des visuell zumindest teilweise verdeckten Verkehrsobjekts 310 besteht darin, dass das Verkehrsobjekt 310 mittels der Signalisierungseinrichtung des Fahrzeugs 100 für den Fahrer virtuell vor dem Verdeckungsobjekt 310 dargestellt wird. Somit ist eine Verdeckung des Verkehrsobjektes 310 für den Fahrer des Fahrzeugs 100 virtuell aufgehoben. Das erste Signalisierungselement 410 weist einen mittels der Signalisierungseinrichtung angezeigten Rahmen auf, indem das Verkehrsobjekt 310 zumindest teilweise eingefasst dargestellt ist. Das zweite Signalisierungselement 415 weist ein Achtungssymbol auf, das mittels der Signalisierungseinrichtung benachbart zu dem Verkehrsobjekt 310 angezeigt wird. Durch das Signalisieren des visuell zumindest teilweise verdeckten Verkehrsobjekts entsteht beispielsweise ein Eindruck einer optisch bzw. visuell "gläsernen" Kreuzung, wobei verdeckte Verkehrsteilnehmer für den Fahrer des Fahrzeugs 100 mittels der Signalisierungseinrichtung virtuell ortsrichtig sowie unverdeckt eingeblendet werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren (200) zum Signalisieren eines visuell teilweise verdeckten Verkehrsobjekts (310) für einen Fahrer eines Fahrzeugs (100), wobei das Verfahren (200) folgende Schritte aufweist:
Einlesen (210) einer Objektinformation, die ein erfasstes Verkehrsobjekt (310) repräsentiert, das entlang einem von dem Fahrzeug (100) zu befahrenden Straßenabschnitt angeordnet ist, wobei als Objektinformation Bilddaten von einer Fahrzeugkamera und/oder ein fahrzeugexternes Datensignal von einer Datenempfangseinrichtung eingelesen werden;
Bestimmen (220), ob das erfasste Verkehrsobjekt (310) für den Fahrer des Fahrzeugs (100) durch zumindest ein Verdeckungsobjekt (320) visuell teilweise verdeckt ist, wobei das Bestimmen (220) unter Verwendung der Objektinformation und von Umgebungsdaten des Fahrzeugs (100) erfolgt, um eine Verdeckungsinformation zu erzeugen;
Ermitteln einer Vorfahrtsrechtsinformation über ein Vorfahrtsrecht des visuell teilweise verdeckten Verkehrsobjekts (310) bezüglich des Fahrzeugs (100) unter Verwendung der Objektinformation und der Umgebungsdaten des Fahrzeugs (100); und
Generieren (230) eines Hinweissignals zum Signalisieren des visuell teilweise verdeckten Verkehrsobjekts (310), wobei das Generieren (230) in Abhängigkeit von der Objektinformation, den Umgebungsdaten und der Verdeckungsinformation erfolgt, wobei das Hinweissignal in Abhängigkeit von der Vorfahrtsrechtsinformation generiert wird, um ein Signalisieren des Vorfahrtsrechts zu bewirken.

2. Verfahren (200) gemäß Anspruch 1, **dadurch gekennzeichnet, dass** im Schritt des Generierens (230) ein Hinweissignal zum optischen Signalisieren des visuell zumindest teilweise verdeckten Verkehrsobjekts (310) zur Anzeige mittels einer Blickfeldanzeigevorrichtung im Bereich einer Frontscheibe des Fahrzeugs (100) generiert wird.

3. Verfahren (200) gemäß Anspruch 2, **dadurch gekennzeichnet, dass** im Schritt des Generierens (230) ein Hinweissignal generiert wird, um zum optischen Signalisieren eine durch das zumindest eine Verdeckungsobjekt (320) visuell unverdeckte Anzeige des visuell zumindest teilweise verdeckten Verkehrsobjekts (310) zu bewirken.

4. Verfahren (200) gemäß einem der vorangegangenen Ansprüche, **gekennzeichnet durch** einen Schritt des Ausgebens des Hinweissignals an eine Schnittstelle zu einer Signalisierungseinrichtung (106) und zu mindestens einem Fahrerassistenzsystem.

5. Verfahren (200) gemäß einem der vorangegangenen Ansprüche, **dadurch gekennzeichnet, dass** im Schritt des Bestimmens (220) als Umgebungsdaten Kartendaten aus einer Navigationsdatenbank und/oder Bilddaten von einer Fahrzeugkamera verwendet werden.

6. Vorrichtung (110) zum Signalisieren eines visuell teilweise verdeckten Verkehrsobjekts (310) für einen Fahrer eines Fahrzeugs (100), wobei die Vorrichtung (110) folgende Merkmale aufweist:
eine Einrichtung (112) zum Einlesen einer Objektinformation, die ein erfasstes Verkehrsobjekt (310) repräsentiert, das entlang einem von dem Fahrzeug (100) zu befahrenden Straßenabschnitt angeordnet ist, wobei als Objektinformation Bilddaten von einer Fahrzeugkamera und/oder ein fahrzeugexternes Datensignal von einer Datenempfangseinrichtung eingelesen werden;
eine Einrichtung (114) zum Bestimmen (220), ob das erfasste Verkehrsobjekt (310) für den Fahrer des Fahrzeugs (100) durch zumindest ein Verdeckungsobjekt (320) visuell teilweise verdeckt ist, wobei die Einrichtung (114) ausgebildet ist, um das Bestimmen (220) unter Verwendung der Objektinformation und von Umgebungsdaten des Fahrzeugs (100) durchzuführen, um eine Verdeckungsinformation zu erzeugen;
eine Einrichtung zum Ermitteln einer Vorfahrtsrechtsinformation über ein Vorfahrtsrecht des visuell teilweise verdeckten Verkehrsobjekts (310) bezüglich des Fahrzeugs (100) unter Verwendung der Objektinformation und der Umgebungsdaten des Fahrzeugs (100); und
eine Einrichtung (116) zum Generieren eines Hinweissignals zum Signalisieren des visuell teilweise verdeckten Verkehrsobjekts (310), wobei die Einrichtung (116) ausgebildet ist, um das Generieren (230) in Abhängigkeit von der Objektinformation, den Umgebungsdaten und der Verdeckungsinformation durchzuführen, wobei die Einrichtung (116) zum Generieren ausgebildet ist, um das Hinweissignal in Abhängigkeit von der Vorfahrtsrechtsinformation zu generieren, um ein Signalisieren des Vorfahrtsrechts zu bewirken.

7. Computer-Programmprodukt mit Programmcode zur Durchführung eines Verfahrens (200) nach einem der Ansprüche 1 bis 5, wenn das Programm auf einer Vorrichtung (110) ausgeführt wird.

## Claims

1. Method (200) for signalling a traffic object (310) which is at least partially visually concealed to a driver of a vehicle (100), wherein the method (200) comprises the following steps:
reading in (210) object information which represents a detected traffic object (310) which is arranged along a road section which is to be travelled along by the vehicle (100), wherein image data from a vehicle camera, and/or a vehicle-external data signal are read in as object information by a data reception device;
determining (220) whether the detected traffic object (310) is partially visually concealed to the driver of the vehicle (100) by at least one concealing object (320), wherein the determination (220) is carried out using the object information and the surroundings data of the vehicle (100), in order to generate concealing information;
obtaining priority information about a priority of the partially visually concealed traffic object (310) with respect to the vehicle (100) using the object information and the surroundings data of the vehicle (100); and
generating (230) an indication signal for the signalling of the partially visually concealed traffic object (310), wherein the generation (230) takes place as a function of the object information, the surroundings data and the concealing information, wherein the indication signal is generated as a function of the priority information, in order to bring about signalling of the priority.

2. Method (200) according to Claim 1, **characterized in that** in the generating step (230) an indication signal for visually signalling the at least partially visually concealed traffic object (310) for display by means of a field of vision displaying device is generated in the region of a front windscreen of the vehicle (100).

3. Method (200) according to Claim 2, **characterized in that** in the generating step (230) an indication signal is generated in order to bring about, for the purpose of optical signalling, a display, which is not visually concealed by the at least one concealing object (320), of the at least partially visually concealed traffic object (310).

4. Method (200) according to one of the preceding claims, **characterized by** a step of outputting the indication signal to an interface of a signalling device (106) and of at least one driver assistance system.

5. Method (200) according to one of the preceding claims, **characterized in that** in the determining step (220) map data from a navigation database and/or image data from a vehicle camera are used as surroundings data.

6. Device (110) for signalling a partially visually concealed traffic object (310) for a driver of a vehicle (100), wherein the device (110) has the following features:
a device (112) for reading in object information which represents a detected traffic object (310) which is arranged along a road section which is to be travelled along by a vehicle (100), wherein image data from a vehicle camera, and/or a vehicle-external data signal are read in as object information by a data reception device;
a device (114) for determining (220) whether the detected traffic object (310) is partially visually concealed to the driver of the vehicle (100) by at least one concealing object (320), wherein the device (114) is designed to carry out the determining (220) using the object information and surroundings data of the vehicle (100), in order to generate concealing information;
a device for obtaining priority information about a priority of the partially visually concealed traffic object (310) with respect to the vehicle (100) using the object information and the surroundings data of the vehicle (100); and
a device (116) for generating an indication signal for signalling the partially visually concealed traffic object (310), wherein the device (116) is designed to carry out the generating (230) as a function of the object information, the surroundings data and the concealing information wherein the device (116) for generating is designed to generate the indication signal as a function of the priority information, in order to bring about signalling of the priority.

7. Computer program product with program code for carrying out a method (200) according to one of Claims 1 to 5 when then program is executed on a device (110).

## Revendications

1. Procédé (200) pour signaler un objet de transport en partie visuellement masqué (310) pour un conducteur d'un véhicule (100), dans lequel le procédé (200) comprend les étapes consistant à :
lire (210) une information d'objet qui représente un objet de transport détecté (310) disposé le long d'une section de route devant être parcourue par le véhicule (100), dans lequel des données d'image provenant d'une caméra de véhicule et/ou un signal de données extérieur au véhicule sont lus en tant qu'information d'objet par un dispositif de réception de données ;
déterminer (220) si l'objet de transport détecté (310) est en partie visuellement masqué pour le conducteur du véhicule (100) par au moins un objet de masquage (320), dans lequel la détermination (220) est effectuée en utilisant l'information d'objet et des données d'environnement du véhicule (100) afin de générer une information de masquage ;
déterminer une information de droit de passage concernant un droit de passage de l'objet de transport en partie visuellement masqué (310) par rapport au véhicule (100) en utilisant l'information d'objet et les données d'environnement du véhicule (100) ; et
générer (230) un signal indicateur pour signaler l'objet de transport en partie visuellement masqué (310), dans lequel la génération (230) a lieu en fonction de l'information d'objet, des données d'environnement et de l'information de masquage, dans lequel le signal indicateur est généré en fonction de l'information de droit de passage afin d'effectuer une signalisation du droit de passage.

2. Procédé (200) selon la revendication 1, **caractérisé en ce que**, lors de l'étape de génération (230), un signal indicateur destiné à signaler optiquement l'objet de transport au moins en partie visuellement masqué (310) est généré en vue d'un affichage au moyen d'un dispositif d'affichage de champ de vision dans la zone d'un pare-brise du véhicule (100).

3. Procédé (200) selon la revendication 2, **caractérisé en ce que**, lors de l'étape de génération (230), un signal de référence est généré afin de produire, pour la signalisation optique, un affichage non visuellement masqué, par l'au moins un objet de masquage (320), de l'objet de transport (310) au moins en partie visuellement masqué.

4. Procédé (200) selon l'une des revendications précédentes, **caractérisé par** une étape consistant à délivrer le signal indicateur à une interface d'un dispositif de signalisation (106) et à au moins un système d'aide à la conduite.

5. Procédé (200) selon l'une des revendications précédentes, **caractérisé en ce que**, lors de l'étape de détermination (220), des données cartographiques provenant d'une base de données de navigation et/ou des données d'image provenant d'une caméra de véhicule sont utilisées en tant que données d'environnement.

6. Dispositif (110) pour signaler un objet de transport en partie visuellement masqué (310) pour le conducteur d'un véhicule (100), dans lequel le dispositif (110) comporte les éléments caractéristiques suivants :
un moyen (112) pour lire une information d'objet qui représente un objet de transport détecté (310), qui est disposé le long d'une section de route devant être parcourue par le véhicule (100), dans lequel des données d'image provenant d'une caméra de véhicule et/ou un signal de données extérieur au véhicule provenant d'un moyen de réception de données sont lus en tant qu'information d'objet ;
un moyen (114) pour déterminer (220) si l'objet de transport détecté (310) est en partie visuellement masqué pour le conducteur du véhicule (100) par au moins un objet de masquage (320), dans lequel le moyen (114) est conçu pour effectuer la détermination (220) en utilisant l'information d'objet et des données d'environnement du véhicule (100) afin de générer une information de masquage ;
un moyen pour déterminer une information de droit de passage concernant un droit de passage de l'objet de transport en partie visuellement masqué (310) par rapport au véhicule (100) en utilisant l'information d'objet et les données d'environnement du véhicule (100) ; et
un moyen (116) pour générer un signal indicateur pour signaler l'objet de transport en partielle visuellement masqué (310), dans lequel le moyen (116) est conçu pour effectuer la génération (230) en fonction de l'information d'objet, des données d'environnement et de l'information de masquage, dans lequel le moyen (116) est conçu pour générer le signal indicateur en fonction de l'information de droit de passage afin de signaler l'information de droit de passage.

7. Produit de programme d'ordinateur comportant un code de programme destiné à mettre en oeuvre un procédé (200) selon l'une des revendications 1 à 5 lorsque le programme est exécuté sur un dispositif (110).
